## Europäisches Patentamt
## European Patent Office
## Office européen des brevets

(19)

(11) Veröffentlichungsnummer: **0 054 749 B1**

(12) **EUROPÄISCHE PATENTSCHRIFT**

(45) Veröffentlichungstag der Patentschrift:
**13.05.87**

(51) Int. Cl.⁴: **C 12 C 1/14**

(21) Anmeldenummer: **81109821.9**

(22) Anmeldetag: **21.11.81**

(54) **Belade- und Abräumeinrichtung für Hordenböden in Mälzereien.**

(30) Priorität: **24.12.80 DE 3049107**

(43) Veröffentlichungstag der Anmeldung:
**30.06.82 Patentblatt 82/26**

(45) Bekanntmachung des Hinweises auf die Patenterteilung:
**13.05.87 Patentblatt 87/20**

(84) Benannte Vertragsstaaten:
**BE DE FR GB SE**

(56) Entgegenhaltungen:
**DD - C - 66 705**
**DE - A - 2 153 343**
**DE - A - 2 541 583**

(73) Patentinhaber: **Bühler-MIAG GmbH,
Ernst-Amme-Strasse 19, D-3300 Braunschweig (DE)**

(72) Erfinder: **Bühler, Urs, Dipl.-Ing., Bäckerplatz 4,
D-3155 Edemissen-Rietze (DE)**
Erfinder: **Brüggemann, Heinz, Dr.-Ing., Erlenkamp 12,
D-3300 Braunschweig (DE)**
Erfinder: **Faist, Walter, Meisenweg 12, D-3303 Vechelde
(DE)**
Erfinder: **Rüsch, Friedrich-Wilhelm, Dipl.-Ing.,
Billrothstrasse 5, D-3300 Braunschweig (DE)**

(74) Vertreter: **Hansmann, Dierk, Dipl.-Ing., Jessenstrasse 4,
D-2000 Hamburg 50 (DE)**

## Beschreibung

Die Erfindung bezieht sich auf eine Einrichtung zum Beladen und Abräumen von Hordenböden in Mälzereien mit einer zentral im Gutbehandlungsraum plazierten Säule und einem an letzterer geführten, motorisch angetriebenen Räumwerkzeug, das um die Säule drehbar sowie an ihr herauf- und herunterbeweglich ist und mehrere je mit einer Anzahl Räumschare besetzte Räumarme aufweist, welche durch Aufhängemittel mit einem auf der Säule angeordneten Antriebsorgan verbunden sind.

Einrichtungen dieser Art sind in Mälzereien der heute üblichen Grössenordnungen unerlässliche Voraussetzung für einen rationellen Mälzprozess; erhebliche Schüttungsmengen sind zu bewältigen, d.h., eine grosse Menge Korngut ist jeweils auf die Horde zu transportieren, dort zu einer homogenen Schicht zu verteilen und einzuebnen und nach dem Keimen und Darren wieder von der Horde abzuräumen; mit ihrer Hilfe werden die Mälzzyklen durch den geringen Zeitaufwand für Hilfsarbeiten verkürzt und Arbeitskräfte eingespart.

Eine bekannte Einrichtung dieser Gattung weist in einem Behälter zum Herstellen von Malz mit kreisförmigem Grundriss vertikal verschiebbare, die Oberfläche des Mälzgutes ebenhaltende Schabemittel auf, die an dem Kranz eines Schlittens angeordnet sind, welcher von einer im Zentrum des Behälters befindlichen lotrechten Führungssäule verschiebebeweglich aufgenommen wird und die Antriebsmittel für sich sowie die Schabemittel trägt (DE-A-2 153 343). Ein anderes Gerät dieser Art vom Stande der Technik besitzt ein senkrecht bewegbares und um eine vertikale Achse drehbewegliches Räumwerkzeug, das in einer gemeinsamen horizontalen Ebene liegende Räumarme aufweist und an mehreren Seilsträngen unmittelbar aufgehängt ist, die auf der Trommel einer Winde aufwickelbar sind, wobei die Windentrommel gleichachsig mit dem Räumwerkzeug angeordnet ist und die Seilstränge von dessen Räumarmen direkt zu ihr geführt sind und die Winde sowohl zum Erzeugen der Vertikalbewegung als auch der Drehbewegung des Räumwerkzeuges dient (DE-A-2 541 583). Bei dieser Ausbildung besteht der Mangel, dass beim Anfahren des mit Gut überdeckten Räumwerkzeuges erhebliche Belastungen in den Seilen auftreten und beim Auftauchen aus der Gutschicht mit einer Entlastung, das Räumwerkzeug vorschnellt, so dass die Gutoberfläche in ihrer Struktur gestört wird. Ferner besteht der Mangel, dass im Hochbauteil zusätzliche Massnahmen erforderlich sind, wie beispielsweise Ausformungen eines Behandlungsraumes zur Aufnahme des Motors und einer Motorkonsole. Es sind also beim Einsetzen der Säule zusätzliche Abstimmungen erforderlich, die auch eine Materialzuführung beeinträchtigen.

Bekannt ist ferner eine für Schüttgutsilos bestimmte Einrichtung zum Verteilen des Schüttgutes, bei der das Gut über eine Mittelsäule zugeführt und entleert wird, an welcher in unterschiedlichen Höhen zwei Querbalken drehbeweglich angeordnet sind, wobei der von einem Trägerteil am oberen Ende der Mittelsäule gestützte und mit einer langsamen Drehbewegung antreibbare obere Querbalken den unteren Querbalken mitnimmt, welcher höhenveränderbar und auf den Boden des Silos mittels Seilen absenkbar ist, die zwischen den beiden Querbalken derart verlaufen, dass jedes Seil gleichzeitig als Aufhängung für den unteren Querbalken dient, um den unteren Querbalken senkrecht zu dem oberen Querbalken zu halten, und wobei der untere Querbalken mit Räumwerkzeugen in Form von Schaufeln ausgerüstet ist, mit deren Hilfe das Gut in Abhängigkeit vom Drehsinn der beiden Querbalken entweder radial nach aussen zur Peripherie oder radial nach innen zur Mittelsäule transportiert wird (DD-PS 66 705).

Aufgabe der Erfindung ist es, eine Verbesserung einer gattungsgemässen motorisch angetriebenen Belade- und Abräumeinrichtung für Hordenböden zu schaffen, die alle Funktionselemente an der Säule aufweist sowie einen einfachen autarken Aufbau ohne Einbeziehung der Gebäudeteile ermöglicht und dadurch sowohl für hohe als auch für niedrige Gutbehandlungsräume einsetzbar sowie für sämtliche geforderten Leistungen auslegbar ist, wobei zusätzlich die empfindlichen Teile, wie Motoren und Antriebselemente, stationär dort unterbringbar sind, wo sie am wenigsten negativen Einflüssen wie Nässe bzw. Feuchtigkeit, Hitze oder Staub sowie Beeinträchtigungen von seiten des behandelten Gutes selbst ausgesetzt sind.

Diese Aufgabe ist bei Einrichtungen der eingangs zitierten Gattung dadurch gelöst, dass oben im Gutbehandlungsraum an der Säule eine Plattform orts- und drehfest angebracht ist und auf der Plattform ein um die Achse der Säule durch Antriebsmittel bewegbarer Antriebsring abgestützt ist, an dem die Aufhängemittel für die Räumarme angeschlossen sind, und dass unterhalb der Plattform auf der Säule drehbeweglich ein Lagerkörper vorgesehen ist, der die Räumarme aufnimmt und von Antriebsmitteln relativ zur Plattform die Säule entlang bewegbar ist, wobei sowohl die Antriebsmittel für den Antriebsring als auch die Antriebsmittel für den Lagerkörper an der Plattform angeordnet sind. Eine günstige Bauform ist es hierbei, wenn der Antriebsring mittels Kugeldrehverbindung an der Plattform gelagert und mit Anschlüssen für die Aufhängemittel ausgestattet ist, wobei an der Plattform wenigstens ein Drehantrieb angeordnet ist, dessen Antriebsritzel mit einer an dem einen Ring der Kugeldrehverbindung befindlichen Verzahnung im Eingriff steht. Um einen einseitigen Kraftangriff zu vermeiden, empfiehlt es sich, zwei diametral an der Plattform einander gegenüberliegend angeordnete Drehwerke vorzusehen. Nach der weiteren Erfindung umfasst der Lagerkörper zwei relativ zueinander bewegliche Teile, von welchen an dem einen Teil die Räumarme angeschlossen sind und der andere Teil an der Plattform aufgehängt und mittels einer Hubvorrichtung an der Säule herauf- und herunterbewegbar ist. Durch diese Mehrteiligkeit des Lagerkörpers wird ermöglicht, dass einerseits die Räumarme rotieren können, andererseits aber die Aufhängemittel nicht mitgedreht und dabei verdreht werden. Als Aufhängemittel, welche die Räumarme abfangen und gleichzeitig als Kraftübertragungsglieder für den Drehantrieb dienen, sind Seilstränge, Kettenstränge oder Stangen vorgesehen.

Im Sinne eines möglichst gleichmässigen Endproduktes kommt es beim Mälzverfahren entscheidend darauf an, dass im gesamten Bereich der Horde die einzelnen Gerstekörner bzw. die Körner des Grünmalzes die gleiche Behandlung nach Art der Dauer erfahren. Neben einem gleichmässigen Beaufschlagen mit dem Behandlungsmedium wie Wasser und Trocknungsluft ist bislang die gleichmässige Beschichtung des Hordenbodens hierfür als wesentliche Voraussetzung angesehen worden. Im praktischen Betrieb hat es sich aber häufig gezeigt, dass das Malz dennoch ungleichmässig wurde oder nach erfolgtem Darren in gewissen Bereichen der Gutschicht unzureichend abgetrocknet war. Nach neuerer Erkenntnis hat dies seine Ursache in einer differenzierten Dichte, mit der das Korngut – trotz konstanter Höhe der Gutschicht – auf dem Hordenboden liegt. Diese unterschiedliche Dichte innerhalb der Gutschicht rührt einmal daher, dass im Zuführbereich das nachströmende Korngut auf die am Hordenboden bereits befindliche Gutschicht fällt und letztere in besagtem Bereich durch eine Art Prallwirkung verdichtet, während das von den Räumarmen aus dem Zentrum an die Peripherie der Horde geförderte Korngut diese Verdichtung nicht erfährt, dort also die Gutschicht mit geringerer Dichte aufgeschüttet wird.

Erfolgt das Beladen der Horde abschnittweise im Kreis herum, wie dies z.B. bei Verwendung eines Schneckenförderers als Räumwerkzeug geschieht, der schrittweise im Uhrzeigersinn oder entgegengesetzt die Gutschicht aufbaut und anschliessend nivelliert, so kann während des längere Zeit dauernden Beladevorganges das Korngut im zuerst aufgeschütteten Abschnitt in dieser Zeit unter seinem Eigengewicht absacken und sich dabei verdichten gegenüber dem Gut im zuletzt aufgeschütteten Abschnitt. Dieser Verdichtungseffekt wird noch gesteigert durch das Übereinanderlegen mehrerer Schichten, die sämtliche wie die erste bzw. unterste Schicht sektorweise aufgeschüttet werden, bis die vorgegebene Guthöhe auf dem Hordenboden erreicht ist. Die nachfolgende Nivellierung der Gutschicht ändert dabei nichts an ihrer ungleichmässigen Dichte.

Eine wichtige Nebenaufgabe der Erfindung besteht deshalb darin, die nachteiligen Folgen unterschiedlicher Gutdichte auszuschliessen oder zumindest zu verringern. Zum Lösen dieser Aufgabe wird ausgegangen von der Erkenntnis, dass im Bereich mit der höheren Gutdichte deren Einfluss durch Verminderung der Schichthöhe ausgeglichen werden kann, so dass die Gutschicht überall – im Zentrum wie an der Peripherie – denselben Widerstand für das sie durchdringende Behandlungsmedium hat. Um in diesem Sinne die Horden beladen zu können, ist in Weiterausgestaltung der erfindungsgemässen Einrichtung der bzw. jeder Räumarm in bezug auf die Ladefläche des Hordenbodens parallel- und schrägstellbar ausgebildet. Die Parallelstellung der Räumarme dient hierbei wie üblich zum Abräumen des Malzes vom Hordenboden, während für das Beladen des Hordenbodens die Räumarme so schräg gestellt werden, dass dort, wo die obere Gutdichte ist, mit der kleinsten und dort, wo die Gutdichte am kleinsten ist, mit der grössten Schichthöhe beladen wird, d.h. radial vom Zentrum nach aussen mit zunehmender Schichthöhe – bei zentraler Gutzufuhr.

Für die Schrägstellbarkeit ist bzw. sind nach einem anderen Erfindungsmerkmal der Räumarm bzw. die Räumarme schwenkbeweglich an einem Lagerkörper angebracht, welcher um die Säule drehbeweglich und durch einen motorischen Antrieb an dieser herauf- und herunterbewegbar ist, und sind motorische Stellmittel zum Verstellen der Räumarme in vertikaler Ebene vorgesehen. Hierbei umfassen die Stellmittel gemäss der weiteren Erfindung für jeden Räumarm zwei Steuerglieder, von denen das eine mit dem Lagerkörper und das andere mit dem Räumarm bewegungsmässig zu einer Einheit verbunden ist. Die Steuerglieder selbst können verschieden gestaltet sein.

Eine einfache und robuste Form der Steuerglieder ist es, wenn das eine Steuerglied als Steuerkurve ausgebildet ist, die mit dem Räumarm verbunden ist, und das zweite Steuerglied eine Steuerrolle ist, welche an dem Lagerkörper angeordnet ist. Bildet man die Räumarme als Winkelhebel aus und ordnet die Steuerkurve an dem einen Arm dieses Winkelhebels an, so kann die Bewegung des die Stellbewegung einleitenden Steuergliedes eine blosse Hub- und Senkbewegung sein.

Eine sowohl im Sinne der Hauptaufgabe als auch im Sinne der Nebenaufgabe vorteilhafte Anordnung des Räumwerkzeuges an der Säule, die neben der Auf- und Abbewegung sowie Drehbewegung desselben auch noch die Schwenkbeweglichkeit für die Schrägstellung ermöglicht, besitzt nach anderen Erfindungsmerkmalen einen Lagerkörper aus einem auf der Säule dreh- und verschiebebeweglich sitzenden Zylinder mit Lageransätzen zum Lagern der Räumarme und einem auf den Zylinder auf- und abbeweglich angeordneten Schlitten, der ein Schlittenoberteil und ein Schlittenunterteil umfasst, welche relativ zueinander drehbeweglich miteinander verbunden sind, wobei an dem Schlittenunterteil die Steuerrollen gelagert sind und das Schlittenoberteil höhenverstellbar an eine Hubvorrichtung angeschlossen ist. Die Hubvorrichtung kann entweder auf einer an der Säule befestigten Plattform angeordnet werden oder unmittelbar oder mittelbar an der Decke des Gutbehandlungsraumes angeordnet sein, wobei das Schlittenoberteil durch eine Kette oder ein Seil mit ihr verbunden ist.

Um zu vermeiden, dass bei der Rotation der Räumarme Steuerkurven und Steuerrollen Relativbewegungen gegeneinander ausführen, wird der Schlitten zweckmässig mit einer Drehsicherung gegen Drehbewegungen relativ zum Zylinder ausgerüstet. Damit einerseits die Räumarme exakt auf das Niveau des Hordenbodens eingestellt werden können, was für ein einwandfreies Abräumen der Horde wichtig ist, und andererseits der Neigungswinkel der Oberfläche der Gutschicht auf der Horde variiert werden kann, sind an dem Zylinder Einstellmittel zum Variieren des Schlittenweges in beiden Bewegungsrichtungen vorgesehen.

In der Zeichnung ist ein Ausführungsbeispiel der Einrichtung gemäss der Erfindung veranschaulicht, anhand dessen im Nachfolgenden weitere Einzelheiten beschrieben werden. Es zeigen:

Fig. 1 einen Längsschnitt durch den Gutbehandlungsraum einer Keimanlage für Gerstenmalz mit der Belade- und Abräumeinrichtung in Ansicht.

Fig. 2 einen Querschnitt durch den Gutbehandlungsraum und die zentrale Säule sowie eine Draufsicht auf die Belade- und Abräumeinrichtung.

Fig. 3 teilweise die Säule und den auf ihr vorgesehenen Lagerkörper mit einem Räumarm in grösserem Massstab und

Fig. 4 teilweise das obere Ende der Säule mit der Plattform, den Antriebsring sowie den Drehantrieb und den Hubantrieb für das Räumwerkzeug, ebenfalls im grösseren Massstab.

Die in den Figuren dargestellte Einrichtung besteht im wesentlichen aus einer Säule 1, einem Räumwerkzeug in Form eines Dreiarmes 2 und einem Drehantrieb mit zwei Drehwerken 3 sowie einer Hubvorrichtung 4 für dieses. Die Säule 1 ist im Zentrum eines zylindrischen Gutbehandlungsraumes 5 mit Boden 6, Decke 7 und zylindrischer Seitenwand 8 fest angeordnet. Auf dem Boden 6 ist mittels Gitterwerk der eigentliche Hordenboden 9 angeordnet, der ringsherum bis an die Seitenwand 8 reicht und dessen die Gerste aufnehmende Ladefläche in bekannter Weise aus Lochblechen 9a besteht. Im Boden 6 ist achsgleich mit der Säule 1 ein Gutauslaufstutzen 10 fest eingesetzt, der durch Verschlussklappen 11 abschliessbar ist. Im Hordenboden 9 sind ringsherum um die Säule 1 und an diese angrenzend mehrere Auslauföffnungen 12 vorgesehen, durch die hindurch die gekeimte Gerste in den Gutauslaufstutzen 10 ausgetragen werden kann. In die Decke 7 ist koaxial zur Säule 1 ein Guteinlaufstutzen 13 eingesetzt, welcher fest mit ihr verbunden ist und durch Verschlusskappen 14 verschliessbar ist. Für das Zuführen der Gerste ist über dem trichterförmigen, oberen Ende des Guteinlaufstutzens 13 ein in letzteren mündendes Zuführrohr 15 vorgesehen. Zum Benetzen der Gerste mit Wasser ist unmittelbar unter dem Guteinlaufstutzen 13 ein Düsenring 16 mit Sprühdüsen 17 angeordnet.

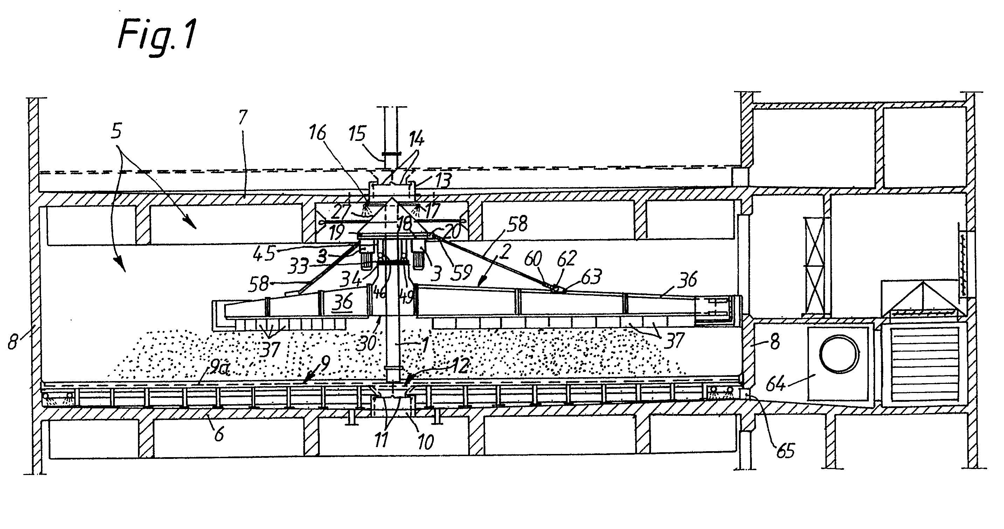

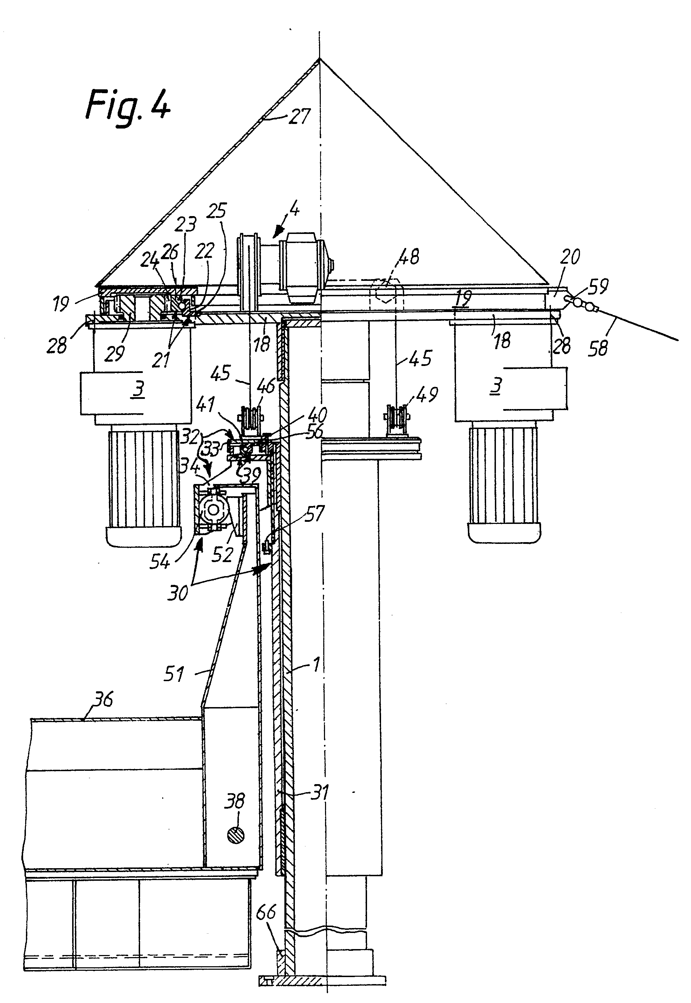

Nahe der Decke 7 ist oben an der Säule 1 eine Plattform 18 drehfest mit ihr verbunden. Auf der Plattform 18 ist ein mit Aufhängeösen 20 versehener Antriebsring 19 unter Verwendung einer Kugeldrehverbindung 21 um die Längsachse der Säule 1 drehbeweglich abgestützt (Fig. 1, 4). Der Innenring 22 der Kugeldrehverbindung 21 ist mittels Schrauben 25 an der Plattform 18 festgeschraubt, ihr eine Verzahnung 24 aufweisender Aussenring 23 ist mit dem Antriebsring 19 durch Schrauben 26 fest verbunden. Eine kegelförmige Haube 27 überdacht die Plattform 18 samt Antriebsring 19 und dient gleichzeitig als Ableitrutsche für die aus dem Guteinlaufstutzen 13 in den Gutbehandlungsraum 5 strömende Gerste. Die beiden Drehwerke 3 des Drehantriebes sind unten an die Plattform 18 mit Hilfe von Schrauben 28 angeflanscht. Das Antriebsritzel 29 jedes dieser beiden diametral einander gegenüberliegenden Drehwerke 3 kämmt mit der Verzahnung 24 des Aussenringes 23 der Kugeldrehverbindung 21.

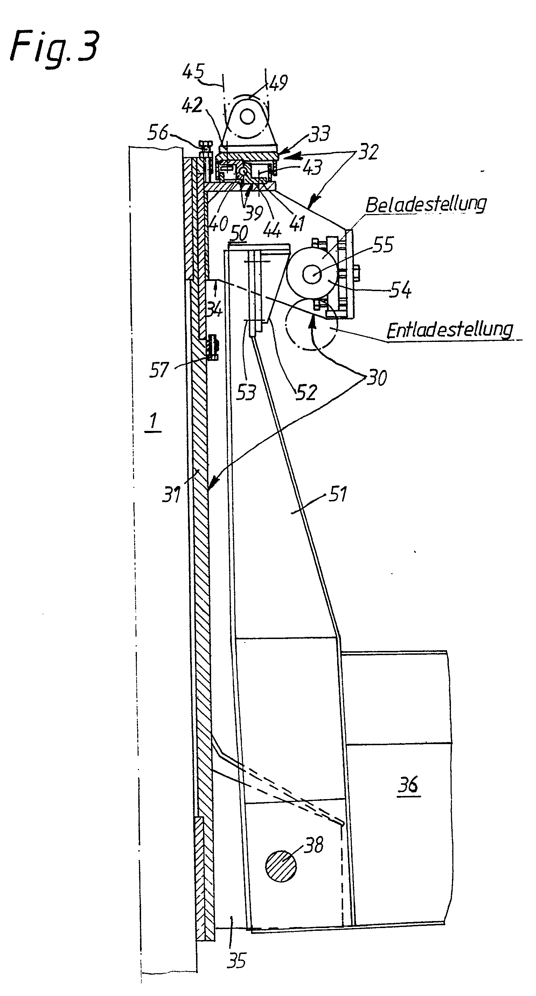

Unterhalb der Plattform 18 ist auf der Säule 1 ein Lagerkörper 30 vorgesehen, welcher um sie drehbeweglich und an ihr herauf- und herunterbewegbar ist und zwei relativ zueinander bewegliche Teile umfasst, nämlich einen auf der Säule 1 dreh- und verschiebebeweglich sitzenden Zylinder 31 sowie einen auf diesem auf- und abbeweglich angeordneten Schlitten 32 (Fig. 3). Der Zylinder 31 besitzt drei Lageransätze 35 zum Lagern der Räumarme 36 des Dreiarmes 2. Jeder der drei mit einer Reihe Räumscharen 37 ausgerüsteten Räumarme 36 ist auf einer Achse 38 schwenkbeweglich gelagert, die in dem zugeordneten Lageransatz 35 fixiert ist.

Der Schlitten 32 besteht aus einem Schlittenoberteil 33 und einem Schlittenunterteil 34, die relativ zueinander drehbeweglich miteinander verbunden sind durch eine Kugeldrehverbindung 39, bestehend aus einem durch Schrauben 42 am Schlittenoberteil 33 angebrachten Innenring 40 und einem mittels Schrauben 43 am Schlittenunterteil 34 befestigten Aussenring 41 sowie Kugeln 44. Unter Vermittlung seines Schlittenoberteils 33 hängt der Schlitten 32 an einer Kette 45 und ist durch letztere an die Hubvorrichtung 4 angeschlossen, welche auf der Plattform 18 angeordnet ist. Die Kette 45 verläuft von der Hubvorrichtung 4 abwärts zu einem Kettenrad 46 am Schlittenoberteil 33, von hier aufwärts zu einem (nicht sichtbaren) Kettenrad auf der Plattform 18, von diesem Kettenrad waagerecht zu einem zweiten Kettenrad 48 auf der Plattform 18 und von diesem wieder abwärts zu einem zweiten Kettenrad 49 am Schlittenoberteil 33 und von dem Kettenrad 49 wieder aufwärts zu einem (nicht sichtbaren) Fixpunkt an der Plattform 18 (Fig. 1, 3 und 4).

Das Schlittenunterteil 34 weist Aufnahmen 50 auf, von denen jedem Räumarm 36 eine zugeordnet ist. Jeder Räumarm 36 ist als Winkelhebel ausgebildet, dessen einer Arm 51 in Richtung der Säule 1 weist und mit seinem freien Ende von der zugeordneten Aufnahme 50 des Schlittenunterteils 34 in Umfangsrichtung ohne Spiel aufgenommen wird. Der Schlitten 32 kann sich dadurch zwar axial gegenüber den Armen 51 der Räumarme 36 bewegen, kann sich aber nicht relativ zum Zylinder 31 bzw. zu den Armen 51 drehen; die Aufnahmen 50 fungieren somit gleichzeitig als Drehsicherung. Um zum einen die Räumarme 36 für das Abräumen der gekeimten Gerste von dem Hordenboden 9 parallel zu diesem einstellen zu können und sie zum anderen für das Beladen des Hordenbodens 9 mit einer in ihrer Höhe unterschiedlichen Gerstenkörnerschicht schräg zu ihm einstellen zu können, sind für jeden Räumarm 36 zwei Steuerglieder vorgesehen, von denen das eine mit dem Lagerkörper 30 und zwar mit dem Schlittenunterteil 34 seines Schlittens 32, und das andere mit seinem Arm 51 zu einer Einheit verbunden ist. Wie Fig. 3 zeigt, ist das mit dem Arm 51 jedes Räumarmes 36 verbundene Steuerglied als Steuerkurve 52 ausgebildet und an ihm durch Schrauben 53 befestigt. Das mit dem Schlittenunterteil vereinigte Steuerglied ist eine Steuerrolle 54, welche in der zugeordneten Aufnahme 50 auf einer in letzterer befestigten Achse 55 drehbeweglich gelagert ist und mit der Steuerkurve 52 an dem dieser Aufnahme 50 zugeordneten Arm 51 zusammenwirkt.

Um einerseits ein einwandfreies Abräumen der gekeimten Gerste vom Hordenboden 9 zu gewährleisten und die Räumarme 36 exakt auf Parallelität mit dem Hordenboden 9 bringen zu können und andererseits die Schichthöhe des Korngutes bzw. den Neigungswinkel der Gutschichtoberfläche variieren zu können, sind Einstellmittel zum Feineinstellen des Schlittenweges in beiden Bewegungsrichtungen vorgesehen. Hierfür sind an dem Zylinder 31 des Lagerkörpers 30 zwei Stellschrauben 56, 57 angeordnet; die Stellschraube 56 dient zum Einstellen der Schrägstellung der Räumarme, die Stellschraube 57 ist für das Einstellen der Räumarme 36 parallel zum Hordenboden 9 da.

Für das Übertragen des Drehmomentes bzw. der Antriebskraft von dem durch die beiden Drehwerke 3 angetriebenen Antriebsring 19 auf die Räumarme 36 und zum Abfangen der letzteren sind drei Seilstränge 58 vorgesehen. Jeder dieser Seilstränge 58 ist mit jedem seiner beiden Enden in einer Seilhülse 59 bzw. 60 verankert, wovon die Seilhülse 59 durch einen Bolzen 61 mit einer Aufhängeöse 20 am Antriebsring 19 und die Seilhülse 60 durch einen Bolzen 62 mit einer am Räumarm 36 angebrachten Aufhängeöse 63 gelenkig verbunden ist.

Arbeitsweise der Einrichtung
a) Beladen des Hordenbodens:

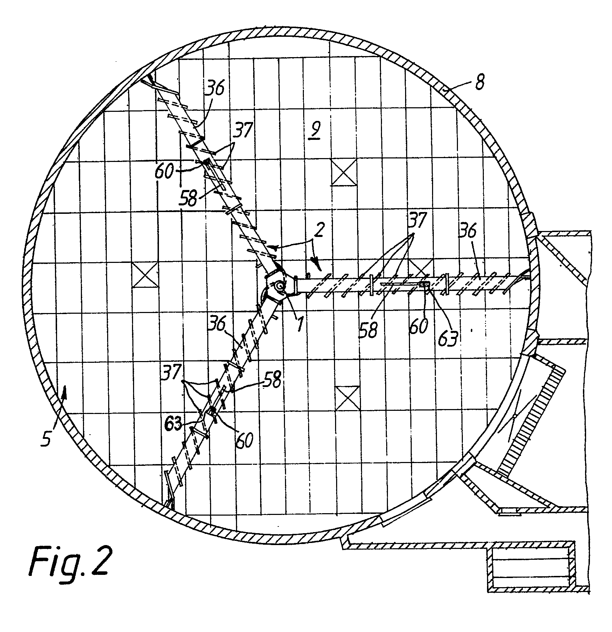

Die über das Zuführrohr 15 und den Guteinlaufstutzen 13 zugeführte und dabei befeuchtete Gerste wird von der Haube 27 so abgeleitet, dass sie sich ringsherum um die Säule 1 auf dem Hordenboden 9 verteilt. Der durch entsprechendes Betätigen der Hubvorrichtung 4 bis auf einen geringen Abstand zu dem Hordenboden 9 abgesenkte und durch die beiden Drehwerke 3 unter Vermittlung des Antriebsringes 19 sowie der Seilstränge 58 im Uhrzeigersinn (Fig. 2) angetriebene Dreiarm 2 rotiert und verteilt die Gerste über den ganzen Hordenboden, indem er sie sowohl in Bewegungsrichtung mitnimmt als auch aufgrund der Schrägstellung der Räumschare 37 seiner Räumarme 36 radial vom Zentrum an die Peripherie des Hordenbodens 9 fördert. Sobald die erste Teilschicht aufgebaut ist, wird mit Hilfe der Hubvorrichtung 4 der Dreiarm 2 um ein der Höhe der nächsten Teilschicht entsprechendes Mass angehoben, was dank der zwischen dem Schlittenoberteil 33 und dem Schlittenunterteil 34 vorgesehenen Kugeldrehverbindung 39 während der Drehbewegung geschehen kann. Mit dem entsprechend nach oben gestellten Dreiarm 2 wird auf die erste Schicht nun eine weitere Gersteschicht aufgebracht und dieser Vorgang so oft wiederholt, bis eine Gutschicht mit der gewünschten Höhe auf dem Hordenboden 9 aufgebracht und diese nivelliert ist.

Um zu gewährleisten, dass die Gerstenkörner möglichst alle die gleiche Behandlung nach Art und Dauer erfahren, wird dort, wo die Gutschicht eine nicht zu vermeidende Verdichtung erfährt, d.h. im Gutzuführbereich um die Säule 1 herum, erfindungsgemäss die Gutschicht mit geringerer Höhe aufgeschüttet als im peripheren Bereich des Hordenbodens 9, so dass also die Gutschicht eine von der Seitenwand 8 zur Säule 1 hin konisch bzw. abwärts verlaufende Oberfläche erhält. Hierfür werden die Räumarme 36 der gewünschten Neigung der besagten Oberfläche entsprechend schräg gestellt. Dies geschieht mit Hilfe der Hubvorrichtung 4, indem durch Einschalten des Antriebsmotors der letzteren im Hubsinne unter Vermittlung der Kette 45 der Schlitten 32 so weit auf dem Zylinder 31 nach oben bewegt wird, bis der Schlittenunterteil 34 an der Stellschraube 56 anliegt (Stellung des Schlittens 32 gemäss Fig. 3). Bei dieser Aufwärtsbewegung des Schlittens 32 hat jede Steuerrolle 54 im Zusammenwirken mit der ihr zugehörigen Steuerkurve 52 den zugeordneten Arm 51 entgegen dem Uhrzeigersinn verschwenkt und damit auch den mit letzterem zu einer Einheit verbundenen Räumarm 36; die Räumarme 36 befinden sich also in der Schrägstellung bzw. in der Arbeitsstellung zum Beladen des Hordenbodens 9 und mit dieser Einstellung wird der Beladevorgang, wie obenstehend erläutert, durchgeführt.

Nach erfolgtem Beladen wird der Dreiarm 2 samt dem Lagerkörper 30 mittels der Hubvorrichtung 4 von der Gutschicht weg nach oben in seine Ruhestellung nahe der Plattform 18 bewegt und in dieser Position von der Hubvorrichtung 4 gehalten. Die auf dem Hordenboden 9 befindliche Gerste wird dann z.B. 24 Stunden lang keimen gelassen, wobei sie evtl. noch mehrere Male nachbenetzt wird. Während dieser Zeit wird die Körnerschicht auf dem Hordenboden 9 mit konditionierter Luft beaufschlagt, die ein Sauggebläse 64 (Fig. 1) über den Kanal 65 von oben nach unten durch die Körnerschicht und die Lochbleche 9a des Hordenbodens 9 saugt. Dieser Keimprozess erstreckt sich über mehrere Tage, wobei z.B. im 24-Stunden-Rhythmus die auf dem Hordenboden 9 befindliche Charge umgeladen wird auf den Hordenboden 9 eines nachgeschalteten anderen Gutbehandlungsraumes 5, beispielsweise eines unmittelbar an den Boden 6 anschliessenden Gutbehandlungsraumes 5, in welchen der Gutauslaufstutzen 10 mündet.

b) Abräumen des Hordenbodens:

Zum Abräumen der Gerste von dem einen Hordenboden für das Umladen auf einen anderen Hordenboden oder beispielsweise zum Abtransport des fertigen Malzes aus dem Gutbehandlungsraum einer Darre werden zunächst die Verschlusskappen 11 geöffnet, und die Gerste strömt durch die Auslauföffnungen 12 und den Gutauslaufstutzen 10 unter der Wirkung der Schwerkraft ab, wobei sich in der Körnerschicht ein Auslauftrichter ausbildet. Gleichzeitig wird durch entsprechendes Betätigen der Hubvorrichtung 4 der Dreiarm 2 aus seiner Ruhestellung abgesenkt, bis die Räumschare 37 seiner Räumarme 36 in die Kornschicht 3 eingreifen, und nun die Drehwerke 3 im Sinne Abräumen eingeschaltet, welche die immer noch in Schrägstellung befindlichen Räumarme 36 unter Vermittlung des Antriebsringes 19 und der Seilstränge 58 entgegen dem Uhrzeigersinn (Fig. 2) in Drehbewegung versetzen. Die Räumarme 36 fördern bei dieser Rotation mit ihren Räumscharen 37 die Gerste in Umfangsrichtung vorwärts und radial von aussen nach innen zu den Auslauföffnungen 12 hin und in diese hinein. Mit dem stetigen Absenken der Räumarme 6 durch die Hubvorrichtung 4 wird Teilschicht um Teilschicht abgeräumt und die Gerste ausgetragen, bis im Verlaufe der weiteren Abwärtsbewegung von Dreiarm 2 und Lagerkörper 30 der Zylinder 31 des letzteren gegen einen unten an der Säule 1 vorgesehenen Anschlag (nicht veranschaulicht) stösst und von diesem angehalten wird, während der Schlitten 32 von der Vorrichtung 4 weiter abwärts bewegt wird, und zwar relativ zum Zylinder 31 und auf letzterem, bis der Schlittenunterteil 34 an der Stellschraube 57 zur Anlage kommt und von ihr gestoppt wird; ein nicht dargestellter Endschalter schaltet den Antrieb der Hubvorrichtung 4 aus.

Bei der besagten Abwärtsbewegung des Schlittenunterteils 34 bewegen sich auch die Steuerrollen 54 mit abwärts und die in Strichpunktlinien angedeutete Position und geben dadurch die Arme 51 frei, welche unter dem Gewicht der Räumarme 36 dermassen im Uhrzeigersinn um die Achsen 38 verschwenken, dass die Räumarme 36 sich wieder aus der Schrägstellung in die Horizontalstellung bzw. in die Stellung parallel zur Ladefläche des Horizontalbodens 9 zurückbewegen. Der sich dabei weiterdrehende Dreiarm 2 räumt mit seinen nun in Parallelstellung befindlichen Räumarmen 36 und deren Räumscharen 37 die auf dem Hordenboden 9 noch vorhandene, restliche Gerste vollständig ab.

Nach erfolgtem Abräumen des Hordenbodens 9 wird der Dreiarm 2 samt Lagerkörper 30 mit Hilfe der Hubvorrichtung 4 wieder nach oben in die Ruhestellung unter der Plattform 18 angehoben und dort festgehalten.

Der mit der Erfindung erzielte Fortschritt besteht im wesentlichen darin, dass eine vergleichsweise einfache, lediglich einen Hubantrieb und einen Drehantrieb erfordernde Belade- und Abräumeinrichtung für Mälzereien realisiert wurde, die sich im Hinblick auf den Dauereinsatz, für den sie bestimmt ist, durch Robustheit und Anpassungsfähigkeit auszeichnet und deren empfindlichere Bauteile und Aggregate von negativen Einflüssen weitgehend geschützt sind.

Ein weiterer beachtlicher Fortschritt der neuen Einrichtung liegt darin, dass die nachteiligen Folgen der unvermeidbaren unterschiedlichen Gutdichte in der jeweiligen Gutschicht auf dem Hordenboden mit ihrer Hilfe durch einen Ausgleich über die Schichthöhe nahezu vollständig vermieden werden und das Endprodukt auf diese Weise weiter verbessert wird.

**Patentansprüche**

1. Einrichtung zum Beladen und Abräumen von Hordenböden in Mälzereien mit einer zentral im Gutbehandlungsraum plazierten Säule und einem an letzterer geführten, motorisch angetriebenen Räumwerkzeug, das um die Säule drehbar sowie an ihr herauf- und herunterbeweglich ist und mehrere je mit einer Anzahl Räumschare besetzte Räumarme aufweist, welche durch Aufhängemittel mit einem auf der Säule angeordneten Antriebsorgan verbunden sind, dadurch gekennzeichnet, dass oben im Gutbehandlungsraum (5) an der Säule (1) eine Plattform (18) orts- und drehfest angebracht ist und auf der Plattform (18) ein um die Achse der Säule (1) durch Antriebsmittel (3, 29) bewegbarer Antriebsring (19) abgestützt ist, an dem die Aufhängemittel (58) für die Räumarme (36) angeschlossen sind, und dass unterhalb der Plattform (18) auf der Säule (1) drehbeweglich ein Lagerkörper (30) vorgesehen ist, der die Räumarme (36) aufnimmt und von Antriebsmitteln (4, 45) relativ zur Plattform (18) die Säule (1) entlang bewegbar ist, wobei sowohl die Antriebsmittel für den Antriebsring (3, 29) als auch die Antriebsmittel (4, 45) für den Lagerkörper (30) an der Plattform (18) angeordnet sind.

2. Einrichtung nach Anspruch 1, dadurch gekennzeichnet, dass der Antriebsring (19) mittels Kugeldrehverbindung (21) an der Plattform (18) gelagert und mit Anschlüssen (20) für die Aufhängemittel (58) ausgestattet ist.

3. Einrichtung nach Anspruch 1, dadurch gekennzeichnet, dass an der Plattform (18) wenigstens ein Drehantrieb (3) angeordnet ist, dessen Antriebsritzel (29) mit einer an dem einen Ring (23) der Kugeldrehverbindung (21) befindlichen Verzahnung (24) in Eingriff steht.

4. Einrichtung nach Anspruch 1, dadurch gekennzeichnet, dass der Lagerkörper (30) zwei relativ zueinander bewegliche Teile (31, 32) umfasst, von welchen an dem einen Teil (31) die Räumarme (36) angeschlossen sind und der andere Teil (32) an der Plattform (18) aufgehängt und mittels einer Hubvorrichtung (4) an der Säule (1) herauf- und herunterbewegbar ist.

5. Einrichtung nach einem der vorangehenden Ansprüche, dadurch gekennzeichnet, dass als Aufhängemittel Seilstränge (58), Kettenstränge oder Stangen vorgesehen sind, welche die Räumarme (36) abfangen und gleichzeitig als Kraftübertragungsglieder für den Drehantrieb (3) dienen.

6. Einrichtung zum Beladen und Abräumen von Hordenböden in Mälzereien mit einer zentral im Gutbehandlungsraum plazierten Säule und einem an dieser geführten, motorisch angetriebenen Räumwerkzeug, das um die Säule drehbar sowie an ihr herauf- und herunterbeweglich ist und einen oder mehrere Räumarm(e) aufweist gemäss Anspruch 1, dadurch gekennzeichnet, dass der bzw. jeder Räumarm (36) in bezug auf die Ladefläche (9a) des Hordenbodens (9) parallel- und schrägstellbar ausgebildet ist.

7. Einrichtung nach Anspruch 6, dadurch gekennzeichnet, dass der bzw. die Räumarme (36) schwenkbeweglich an einem Lagerkörper (30) angebracht ist bzw. sind, welcher um die Säule (1) drehbeweglich und durch einen motorischen Antrieb (4) an dieser herauf- und herunterbewegbar ist, und dass motorische Stellmittel (4, 45; 52, 54) zum Verstellen der Räumarme (36) vorgesehen sind.

8. Einrichtung nach Anspruch 7, dadurch gekennzeichnet, dass die Stellmittel für jeden Räumarm (36) zwei Steuerglieder (52, 54) umfassen, von denen das eine (54) mit dem Lagerkörper (30, 34) und das andere (52) mit dem Räumarm (36) bewegungsmässig zu einer Einheit verbunden ist.

9. Einrichtung nach Anspruch 8, dadurch gekennzeichnet, dass das eine Steuerglied als Steuerkurve (52) ausgebildet ist, die mit dem Räumarm (36) verbunden ist, und das zweite Steuerglied eine Steuerrolle (54) ist, welche an dem Lagerkörper (30, 34) angeordnet ist.

10. Einrichtung nach Anspruch 9, dadurch gekennzeichnet, dass der bzw. jeder Räumarm (36) als Winkelhebel gestaltet ist, an dessen einem Arm (51) die Steuerkurve (52) vorgesehen ist.

11. Einrichtung nach einem der vorangehenden Ansprüche, dadurch gekennzeichnet, dass der Lagerkörper (30) aus einem auf der Säule dreh- und verschiebbeweglich sitzenden Zylinder (31) mit Lageransätzen (35) zum Lagern der Räumarme (36) und einem auf den Zylinder (31) auf- und abbeweglich angeordneten Schlitten (32) besteht, der ein Schlittenoberteil (33) und ein Schlittenunterteil (34) umfasst, welche relativ zueinander drehbeweglich miteinander verbunden sind, wobei an dem Schlittenunterteil (34) die Steuerrollen (54) gelagert sind und das Schlittenoberteil (33) höhenverstellbar an eine Hubvorrichtung (4) angeschlossen ist.

12. Einrichtung nach Anspruch 11, dadurch gekennzeichnet, dass die Hubvorrichtung (4) auf einer an der Säule (1) befestigten Plattform (18) angeordnet ist und das Schlittenoberteil (33) durch eine Kette (45) oder ein Seil mit ihr verbunden ist.

13. Einrichtung nach Anspruch 11, dadurch gekennzeichnet, dass an dem Zylinder (31) Einstellmittel (56, 57) zum Variieren des Schlittenweges in beiden Bewegungsrichtungen vorgesehen sind.

14. Einrichtung nach Anspruch 11, dadurch gekennzeichnet, dass dem Schlitten (32) eine Drehsicherung (50) gegen Drehbewegung relativ zum Zylinder (31) zugeordnet ist.

**Claims**

1. Device for loading and clearing kiln floors in malthouses, comprising a column disposed in the centre of the product treatment area and a motor-driven clearing tool which is guided at the column, can be rotated about the latter, moved up and down along it and is provided with a plurality of clearing arms which are each fitted with a number of clearing blades and which are connected by suspension means to a drive element arranged on the column, characterised in that at the top of the product treatment area (5) a platform (18) is attached to the column (1) so as to be stationary and non-rotatable, that a drive ring (19), which can be moved around the axis of the column (1) by drive means (3, 29), is supported on the platform (18), to which drive ring the suspension means (58) for the clearing arms (36) are connected, and in that a rotatable bearing element (30) is provided below the platform (18) on the column (1), supports the clearing arms (36) and can be moved by drive means (4, 45) relative to the platform (18) along the column (1), both the drive means for the drive ring (3, 29) and the drive means (4, 45) for the bearing element (30) being arranged at the platform (18).

2. Device according to claim 1, characterised in that the drive ring (19) is mounted by means of a spherical turning attachment (21) at the platform (18) and is provided with connections (20) for the suspension means (58).

3. Device according to claim 1, characterised in that at least one rotary drive (3) is arranged at the platform (18), the driving pinion (29) of which is in engagement with a tooth system (24) disposed at a ring (23) of the spherical turning attachment (21).

4. Device according to claim 1, characterised in that the bearing element (30) comprises two parts (31, 32) which can be moved relative to one another, the clearing arms (36) being connected to one part (31) and the other part (32) being suspended at the platform (18) and moveable up and down along the column (1) by means of a lifting device (4).

5. Device according to one of the preceding claims, characterised in that rope lines (58), chain strands or bars are provided as the suspension means, support the clearing arms (36) and simultaneously act as power transmission elements for the rotary drive (3).

6. Device for loading and clearing kiln floors in malthouses, comprising a column disposed in the centre of the product treatment area and a motor-drive clearing tool which is guided at the column, can be rotated about the latter, moved up and down along it and is provided with one or a plurality of clearing arms according to claim 1, characterised in that the/each clearing arm (36) is formed so as to be tiltable and adjustable in the parallel direction in relation to the loading surface (9a) of the kiln floor (9).

7. Device according to claim 6, characterised in that the clearing arm(s) (36) is/are attached to a bearing element (30) so as to swivel, which bearing element can be rotated about the column (1) and moved up and down along the latter by a motor drive (4), and in that motor-operated adjusting means (4, 45; 52, 54) are provided to adjust the clearing arms (36).

8. Device according to claim 7, characterised in that the adjusting means for each clearing arm (36) comprise two control members (52, 54), one (54) of which is connected to the bearing element (30, 34) and the other (52) of which is connected to the clearing arm (36) in a mobile manner so as to form a unit.

9. Device according to claim 8, characterised in that one control member is formed as a control cam (52), which is connected to the clearing arm (36), and the second control member is a control roller (54), which is arranged at the bearing element (30, 34).

10. Device according to claim 9, characterised in that the/each clearing arm (36) is formed as an angle lever, at one arm (51) of which the control cam (52) is provided.

11. Device according to one of the preceding claims, characterised in that the bearing element (30) consists of a cylinder (31), which is rotatably and displaceably mounted on the column and provided with bearing shoulders (35) for supporting the clearing arms (36), and a slide (32), which is arranged on the cylinder (31) so as to move upwards and downwards and comprises an upper slide part (33) and a lower slide part (34) which are connected together so as to be rotatable relative to one another, the control rollers (54) being mounted at the lower slide part (34) and the upper slide part (33) being connected to a lifting device (4) in a vertically adjustable manner.

12. Device according to claim 11, characterised in that the lifting device (4) is arranged on a platform (18) secured to the column (1) and that the upper slide part (33) is connected to the lifting device by a chain (45) or a rope.

13. Device according to claim 11, characterised in that adjusting means (56, 57) are provided at the cylinder (31) in order to vary the path of the slide in both directions of movement.

14. Device according to claim 11, characterised in that a rotation prevention device (50) is associated with the slide (32) to prevent any rotary movement relative to the cylinder (31).

**Revendications**

1. Dispositif servant à charger et à décharger les fonds des plateaux de touraillage dans les malteries, comportant une colonne qui est placée au centre de la chambre de traitement du produit et un appareil d'enlèvement commandé par moteur et guidé sur la colonne, appareil d'enlèvement qui peut être déplacé par rotation autour de la colonne, de même que par relèvement et par abaissement par rapport à celle-ci, et qui est muni d'un certain nombre de bras d'enlèvement portant des socs d'enlèvement et reliée par des éléments de suspension à un organe de commande prévu sur la colonne, le dispositif étant caractérisé en ce qu'il comporte une plate-forme (18) qui est montée fixe sur la colonne (1), sans possibilité de rotation par rapport à celle-ci, dans la partie supérieure de la chambre de traitement du produit (5), et en ce que sur la plate-forme (18) prend appui un anneau de commande (19) pouvant être déplacé autour de l'axe de la colonne (1) à l'intervention de moyens de commande (3, 29), anneau de commande (19) auquel sont reliés les éléments de suspension (58) prévus pour les bras d'enlèvement (36), le dispositif étant en outre caractérisé en ce qu'en dessous de la plate-forme (18), sur la colonne (1), il est prévu un dispositif de support (30), pouvant tourner, qui porte les bras d'enlèvement (36), dispositif de support (30) qui peut également être déplacé le long de la colonne (1), par rapport à la plate-forme (18), à l'intervention de moyens de commande (4, 45), tant les moyens de commande (3, 29) prévus pour l'anneau de commande (19) que les moyens de commande (4, 45) prévus pour le dispositif de support (30) étant montés sur la plate-forme (18).

2. Dispositif suivant la revendication 1, caractérisé en ce que l'anneau de commande (19) est monté sur la plate-forme (18) par l'intermédiaire d'une couronne de pivotement à billes (21) et en ce qu'il est muni d'éléments de liaison (20) pour la fixation des éléments de suspension (58).

3. Dispositif suivant la revendication 1, caractérisé en ce que sur la plate-forme (18) est montée au moins une commande de rotation (3), dont le pignon de commande (29) est en prise avec une denture (24) qui est prévue à l'un (23) des anneaux de la couronne de pivotement à billes (21).

4. Dispositiv suivant la revendication 1, caractérisé en ce que le dispositif de support (30) comporte deux parties (31, 32) mobiles l'une par rapport à l'autre, parties à l'une (31) desquelles les bras d'enlèvement (36) sont reliés, l'autre (32) de ces parties étant suspendue à la plate-forme (18) et pouvant être déplacé le long de la colonne (1) à l'intervention d'un dispositif de levage (4).

5. Dispositif suivant l'une quelconque des revendications précédentes, caractérisé en ce qu'il est prévu, comme élément de suspension, des câbles (58), des chaînes ou des tringles qui sont fixés aux bras d'enlèvement (36) et qui servent en même temps d'éléments de transmission d'effort pour la commande de rotation (3).

6. Dispositif servant à charger et à décharger les fonds des plateaux de touraillage dans les malteries, comportant une colonne qui est placée au centre de la chambre de traitement du produit et un appareil d'enlèvement commandé par moteur et guidé sur la colonne, appareil d'enlèvement qui peut être déplacé par rotation autour de la colonne, de même que par relèvement et par abaissement par rapport à celle-ci, et qui est muni d'un ou de plusieurs bras d'enlèvement, suivant la revendication 1, le dispositif étant caractérisé en ce que le bras d'enlèvement (36) ou chacun des bras d'enlèvement (36) est prévu de façon à pouvoir être placé en parallèle et en oblique par rapport à la face de charge (9a) du fond (9) du plateau de touraillage.

7. Dispositif suivant la revendication 6, caractérisé en ce que le bras d'enlèvement (36) ou les bras d'enlèvement (36) sont montés, de façon à pouvoir être mobiles par pivotement, sur un dispositif de support (30) qui peut être déplacé par rotation autour de la colonne (1), de même que par relèvement et par abaissement par rapport à celle-ci, à l'intervention d'une commande à moteur (4), le dispositif étant en outre caractérisé en ce que des moyens de déplacement et de réglage par moteur (4, 45; 52, 54) sont prévus pour le déplacement et le réglage des bras d'enlèvement (36).

8. Dispositif suivant la revendication 7, caractérisé en ce que les moyens de déplacement et de réglage prévus pour le bras d'enlèvement (36) ou pour les différents bras d'enlèvement (36) comportent deux éléments d'actionnement (52, 54), éléments d'actionnement dont l'un (54) est relié, pour le mouvement, au dispositif de support (30, 34), de façon à former une unité avec celui-ci, et dont l'autre (52) est relié, pour le mouvement, au bras d'enlèvement (36), de façon à former une unité avec celui-ci.

9. Dispositif suivant la revendication 8, caractérisé en ce que l'un des éléments d'actionnement est prévu sous la forme d'une came de commande (52) qui est reliée au bras d'enlèvement (36) et en ce que le second élément d'actionnement est prévu sous la forme d'un galet de commande (54) qui se trouve sur le dispositif de support (30, 34).

10. Dispositif suivant la revendication 9, caractérisé en ce que le bras d'enlèvement (36) ou chacun des bras d'enlèvement (36) est prévu sous la forme d'un levier coudé sur l'un (51) des bras duquel se trouve la came de commande (52).

11. Dispositif suivant l'une quelconque des revendications précédentes, caractérisé en ce que le dispositif de support (30) est constitué par un cylindre (31), qui prend appui sur la colonne (1) de façon à pouvoir tourner autour de la colonne et de façon à pouvoir être déplacé sur celle-ci dans le sens vertical, cylindre (31) qui est muni de pièces ou de parties de support faisant saillie (35) destinées au montage des bras d'enlèvement (36) et destinées à supporter les bras d'enlèvement (36), le dispositif de support (30) étant également constitué par un chariot (32) prévu pour suivre un mouvement de montée et un mouvement de descente sur le cylindre (31), chariot (32) qui comporte une partie de chariot supérieure (33) et une partie de chariot inférieure (34) reliées l'une à l'autre de façon à pouvoir être déplacées par rotation l'une par rapport à l'autre, les galets de commande (54) étant montés sur la partie de chariot inférieure (34) et la partie de chariot supérieure (33) étant reliée à un dispositif de levage (4) de façon à pouvoir être déplacée en hauteur.

12. Dispositif suivant la revendication 11, caractérisé en ce que le dispositif de levage (4) est monté sur une plate-forme (18) qui est fixée à la colonne (1) et en ce que la partie de chariot supérieure (33) est reliée au dispositif de levage (4) par une chaîne (45) ou par un câble.

13. Dispositif suivant la revendication 11, caractérisé en ce que sur le cylindre (31), il est prévu des moyens de réglage (56 et 57) qui sont destinés à permettre la modification du trajet de course du chariot (32) dans les deux sens de déplacement de celui-ci.

14. Dispositif suivant la revendication 11, caractérisé en ce qu'il est adjoint au chariot (32) un dispositif de sécurité contre la rotation (50), qui est destiné à empêcher un mouvement de rotation du chariot par rapport au cylindre (31).

# Fig.1

Fig. 2

# Fig.3

Beladestellung

Entladestellung

Fig. 4